# EUROPEAN PATENT APPLICATION

(11) **EP 4 407 558 A1**
(43) Date of publication of application: **31.07.2024**
(21) Application number: 23153399.3
(22) Date of filing: 26.01.2023
(51) Int. Cl.: G06T 7/73

(54) **OBTAINING A MEDICAL IMAGE AT A TARGET PLANE**

(71) Applicant: Koninklijke Philips N.V., 5656 AG Eindhoven (NL)
(72) Inventor: GOOßEN, Andre, Eindhoven (NL); LOSSAU, Tanja, Eindhoven (NL); WILD, Sebastian, 5656 AG Eindhoven (NL); PETERS, Jochen, Eindhoven (NL); GROTH, Alexandra, Eindhoven (NL); WEHLE, Simon, Eindhoven (NL); GESSERT, Nils Thorben, Eindhoven (NL); WAECHTER-STEHLE, Irina, Eindhoven (NL); WEBER, Frank Michael, Eindhoven (NL)
(74) Representative: Philips Intellectual Property & Standards

(57) **Abstract**

A method for obtaining a medical image at a target plane. The method comprises obtaining a three-dimensional, 3D, volume containing an anatomical structure and identifying the anatomical structure in the 3D volume. The geometry of the anatomical structure in the 3D volume is analyzed and the target plane is registered to the 3D volume based on the analysis of the geometry of the anatomical structure. The medical image is extracted from the 3D volume at the registered target plane.

## Description

### FIELD OF THE INVENTION

The invention relates to a method for obtaining a medical image at a target plane. In particular, the method relates to extracting medical images from 3D volumes at a target plane.

### BACKGROUND OF THE INVENTION

Longitudinal medical studies with 2D images are hard to read because of differences in acquisition, e.g., angle, field-of-view (FOV), etc. In longitudinal studies, it is important to maximize the comparability of the exams taken at different points in time. If scanned in 2D, the angle of the imaging device (e.g., an ultrasound transducer) determines the anatomical plane of the resulting scan and deviations in this angle, compared to previous reference exams, may lead to non-comparable exams.

A user comparing exams over time in a longitudinal study has to compensate for any effects of different acquisition. Simple registration of the images may not work as rigid registration cannot always align the views and elastic registration might destroy subtle differences in the anatomy.

As such, there is a need to improve the comparability of exams in a longitudinal study.

### SUMMARY OF THE INVENTION

The invention is defined by the claims.

According to examples in accordance with an aspect of the invention, there is provided a method for obtaining a medical image at a target plane, the method comprising:
obtaining a three-dimensional, 3D, volume containing an anatomical structure:
identifying the anatomical structure in the 3D volume;
analyzing the geometry of the anatomical structure in the 3D volume;
registering the target plane to the 3D volume based on the analysis of the geometry of the anatomical structure; and
extracting the medical image from the 3D volume at the registered target plane.

This enables a user to obtain a 3D volume/dataset without having to be precise with the orientation of the imaging device when capturing a target view/plane. This is because the target plane can be extracted from the 3D volume regardless of the orientation the 3D volume.

In order to precisely extract the target plane from the 3D volume, an anatomical structure in the 3D volume is identified and the geometry of the anatomical structure is analyzed. This analysis of the geometry allows the target plane to be precisely aligned/registered to the 3D volume.

Analyzing the geometry of the anatomical structure may comprise matching features/landmarks in the identified anatomical structure to features expected in the medical image at the target plane. The geometry may include the size of anatomical features, the distance between anatomical features etc.

Registering a first plane/image/volume to a second plane/image/volume generally involves determining the transformation needed to transform the first plane/image/volume to the coordinate system of the second plane/image/volume.

Identifying the anatomical structure may comprise using a model-based segmentation algorithm trained on a model of the anatomical structure.

Model-based segmentation increases the precision of the segmentation as the segmentation algorithm has a-priori information on the anatomical structure which it is segmenting. Typically, medical scans are purposefully performed on target anatomical structures. As such, model-based segmentation is particularly suitable as various algorithms can be trained on target anatomical structures (e.g., heart model, fetal model etc.).

Registering the target plane to the 3D volume may comprise registering the identified anatomical structure to the model of the anatomical structure, wherein the target plane is pre-registered to the model of the anatomical structure.

Different models could be used for different purposes. For example, for cardiac imaging, different models may be available for different types of heart (e.g., pediatric, adult etc.) and/or for different times during the heart cycle. A generic model could also be transformed for the different purposes.

Extracting the medical image may comprise extracting a plurality of medical images from the 3D volume in the vicinity of the registered target plane, determining quality scores for the medical images and selecting a medical image, from the plurality of extracted medical images, based on the quality scores.

Extracting a plurality of medical images from the 3D volume in the vicinity of the registered target plane may include extracting a medical image at the registered target plane.

The medical image extracted at the target plane may not be of suitable quality (or may not have the best quality). As such, it is proposed to extract medical images at other planes in the vicinity of the target plane. Thus, a medical image at a nearby plane, having a higher quality score, may be more appropriate, for example, for comparison with other images taken at different times.

This is particularly advantageous when the user wants to compare 2D slices from two or more 3D volumes as the 2D slices can all be extracted at a plane in the vicinity of the target plane which provides appropriate quality for all of the 2D slices.

Each medical image may have a single quality score. Alternatively, each medical image may have a plurality of quality scores.

The quality score may be based on a noise level, an artifact count, a field of view coverage, a visibility of an anatomical structure etc. In a first example, a quality score for a medical image is a composite score of the above criteria. In a second example, each medical image has a plurality of individual quality score for the above criteria.

The 3D volume can be labelled as a first 3D volume, and the method may further comprise obtaining a second 3D volume containing the anatomical structure, identifying the anatomical structure in the second 3D volume, analyzing the geometry of the anatomical structure in the second 3D volume, registering the target plane to the second 3D volume based on the analysis of the geometry of the anatomical structure in the second 3D volume and extracting a second medical image from the second 3D volume at the registered target plane.

Extracting the second medical image may comprise extracting a plurality of second medical images from the second 3D volume in the vicinity of the registered target plane, determining quality scores for the second medical images and selecting a second medical image, from the plurality of second medical images, based on the quality scores.

Extracting the first medical image (from the first 3D volume) and extracting the second medical image may be based on the quality scores for the extracted first medical images (of the first 3D volume) and the quality scores for the second medical images. The plane for the extracted first medical image and the extracted second medical image may be the same (or within a maximum displacement threshold). This may enable comparability, at an appropriate quality, between two extracted medical images without being limited to a strict target plane (which may, for example, be noisy).

During the 3D acquisition of the first 3D volume and/or second 3D volume, the acquisition process may sometimes be gated to obtain the anatomical structure at the same point during a cycle (e.g., for cardiac imaging).

The method may further comprise obtaining a two-dimensional, 2D, medical scan of the anatomical structure and determining an anatomical plane from the 2D medical scan, wherein the target plane can be selected as the determined anatomical plane.

This enables a medical image to be extracted from the 3D volume which matches the plane of separately obtained medical scan such that they can be compared (e.g., comparing the anatomical structure, at the target plane, from different exams).

The method may further comprise obtaining a 3D reference volume registered to the 2D medical scan, wherein determining the anatomical plane from the 2D medical scan comprises identifying the anatomical plane relative to the 3D reference volume.

The method may further comprise obtaining a first 2D medical scan of the anatomical structure at a first time, obtaining a second 2D medical scan of the anatomical structure at a third time, obtaining the 3D medical volume at a second time, between the first time and the third time and determining a first anatomical plane from the first 2D medical scan and/or a second anatomical plane from the second 2D medical scan, wherein the target plane is one of the first anatomical plane or the second anatomical plane.

For example, the user may be able to choose whether the extracted image is based on a previously obtained image (e.g., at the first time) or based on a later obtained image (e.g., at the third time).

Determining an anatomical plane from a 2D medical scan may comprise using a regression network trained to identify an anatomical plane from any 2D medical scan comprising the anatomical structure.

In other words, plane regression techniques can be used to identify the anatomical plane of the 2D medical scans.

Extracting the medical image from the 3D medical volume may comprise using multi-planar reformation, MPR, on the 3D medical volume.

The 3D medical volume may be a 3D ultrasound volume. Of course, other types of 3D medical data could be used.

The invention also provides a computer program carrier comprising computer program code which, when executed on a processing system, causes the processing system to perform all of the steps of the afore-mentioned methods.

The computer program carrier may, for example, be a data storage system (e.g., a hard drive, a solid-state drive etc.) or a temporary carrier (e.g., a bit-stream).

The invention also provides a system for obtaining a medical image at a target plane, the system comprising a processor configured to:
obtain a three-dimensional, 3D, volume containing an anatomical structure:
identify the anatomical structure in the 3D volume;
analyze the geometry of the anatomical structure in the 3D volume;
register the target plane to the 3D volume based on the analysis of the geometry of the anatomical structure; and
extract the medical image from the 3D volume at the registered target plane.

The system may also comprise an imaging device for obtaining the 3D volume. For example, the imaging device may be a 3D ultrasound transducer.

The processor may be configured to identify the anatomical structure by using a model-based segmentation algorithm trained on a model of the anatomical structure.

The processor may be configured to extract the medical image by extracting a plurality of medical images from the 3D volume in the vicinity of the registered target plane, determining quality scores for the medical images and selecting a medical image, from the plurality of extracted medical images, based on the quality scores.

The 3D volume may be labelled as a first 3D volume, and the processor may be further configured to obtain a second 3D volume containing the anatomical structure, identify the anatomical structure in the second 3D volume, analyze the geometry of the anatomical structure in the second 3D volume, register the target plane to the second 3D volume based on the analysis of the geometry of the anatomical structure in the second 3D volume and extract a second medical image from the second 3D volume at the registered target plane.

The processor may be further configured to obtain a two-dimensional, 2D, medical scan of the anatomical structure and determine an anatomical plane from the 2D medical scan, wherein the target plane is the determined anatomical plane.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figs. 1 illustrates 2D scanning of an anatomical structure at three separate times;
Fig. 2 illustrates 3D scanning of an anatomical structure at three separate times;
Fig. 3 shows a 3D acquisition process;
Fig. 4 illustrates an approach for obtaining a target plane from a 2D slice;
Fig. 5 shows a time series of scans including a first 2D scan, a second 3D scan, a third 3D scan, a fourth 2D scan and a fifth 3D scan; and
Fig .6 shows a method for obtaining a medical image at a target plane using a three-dimensional, 3D, volume containing an anatomical structure.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for obtaining a medical image at a target plane. The method comprises obtaining a three-dimensional, 3D, volume containing an anatomical structure and identifying the anatomical structure in the 3D volume. The geometry of the anatomical structure in the 3D volume is analyzed and the target plane is registered to the 3D volume based on the analysis of the geometry of the anatomical structure. The medical image is extracted from the 3D volume at the registered target plane.

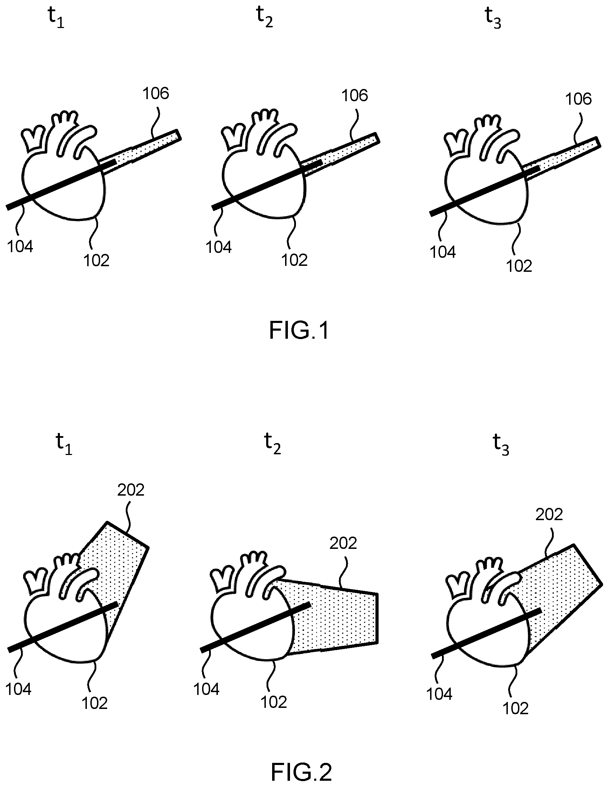

Figs. 1 illustrates 2D scanning of an anatomical structure 102 at three separate times. In Fig. 1, the anatomical structure 102 is shown as a heart for illustrative purposes only. It will be appreciated that other anatomical structures (e.g., lung, liver, fetus etc.) could be imaged instead.

In order for a user to be able to compare the 2D acquisitions (i.e., 2D scans or 2D medical images) at the three separate times *t*₁, *t*₂ and *t*₃, the imaging device (e.g., a transducer for ultrasound imaging) (not shown) must be aligned all three times to the target plane 104. This means that the angle of the imaging device has to be carefully reproduced (e.g., at each separate exam) such that the field of view 106 of the imaging device captures the target plane 104 each time.

If the imaging device is not correctly aligned, the 2D acquisition may be at a different plane and thus would not be comparable to the previous/later acquisitions obtained at the target plane.

It is proposed to solve this problem by acquiring 3D volumes of the anatomical structure 102 and then slicing 2D anatomical planes from a 3D acquisitions.

Recently, ultrasound imaging is moving towards 3D volume acquisition. 3D matrix probes are available for scanning. 2D slices can then be extracted from the 3D volume using pre-defined slicing or parametric slicing. However, such slicing techniques may not always provide 2D slices at a precise target plane.

Fig. 2 illustrates 3D scanning of an anatomical structure 102 at three separate times. In this case, the angle of the imaging device (not shown) is not critical as the field of view 202 is much greater during 3D acquisitions, compared to during 2D acquisitions (as shown in Fig. 1). As such, the target plane 104 can be sliced/extracted from the 3D acquisitions. In other words, slicing 2D anatomical planes from a 3D acquisition relaxes the dependency on the angle of the imaging device during acquisition as a plane that is not axis-aligned with the imaging device can be sliced from the volume, as shown in Fig. 2.

As such, the user does not have to be as precise with their positioning/angle of the imaging device at different times (e.g., at during different exams in a longitudinal study). In some cases, the user may want to compare a current 2D slice, at the target plane 104, with a previous 2D slice. This would have only been possible if the user had also previously acquired a 2D slice at the target plane 104. However, the user may have previously acquired a 3D volume of the anatomical structure 102. Thus, the user can extract a 2D slice from the previously acquired 3D volume at the target plane to compare to the current 2D slice.

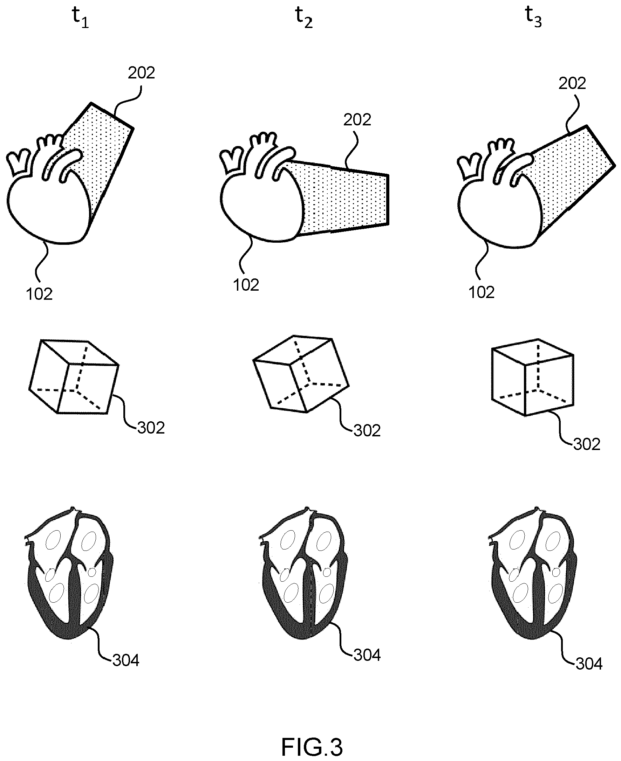

Fig. 3 shows a 3D acquisition process. In particular, Fig. 3 shows an anatomical structure being scanned at three different times, *t*₁, *t*₂ and *t*₃, during three different exams. During each exam, the angle of the imaging device (not shown) is not critical as the 3D acquisition can obtain all the necessary information on the anatomical structure 102 due to the large field of view 202 and store it in a 3D volume 302.

The 3D volumes 302 can be stored, for example, in Cartesian or polar coordinates. The 3D volumes can be sliced (e.g., at a later date) to obtain a medical image 304 at an arbitrary target plane. Thus, even if only 2D acquisitions are required for a longitudinal study (i.e., multiple exams over time), storing the 3D volumes 302 enables the user to extract/slice the 3D volume at a target plane on demand, thereby to obtain comparable medical images 304.

In order to obtain comparable images (i.e., at the same target plane) from un-registered volumes, it is important to be able to align the target planes accurately to each volume such that the 2D slices are accurately aligned to the same target plane.

The target plane can be registered to the volume(s) by first identifying the anatomical structure in the 3D volume. For example, a segmentation algorithm can be used to identify the anatomical structure in the 3D volume. Further, an anatomical model-based segmentation can be used to more accurately identify the anatomical structure. For example, a segmentation algorithm can be trained from one or more models of the anatomical structure (e.g., heart, fetus etc.) to more accurately identify the anatomical model in the 3D volume.

The segmented structure can be treated as an anatomical model. This means that the geometry of the features expected in the target plane can be mapped to features in the segmented anatomical structure. Standard target planes can be carefully defined and validated using combinations of vertices (e.g., center of gravity, axes, distances, etc.) of a certain anatomical structure.

For example, in the case of a of cardiac ultrasound imaging, a target plane could be defined by taking all `mitral valve annulus' vertices to compute the mitral valve center, which also forms the image center. Letting the first axis point towards the left ventricle apex (which is defined by another set of vertices) and letting a second axis point towards the aortic valve center (computed as above), a coordinate system can be derived to register the target plane to the 3D volume. Finally, the size of the medical image can be given by the scaling factor used to adapt an anatomical model to the acquired 3D volume (e.g., during segmentation).

In other words, standard target planes can be defined in a heart coordinate system of an anatomical model and transformed to the 3D volume in the same way the anatomical structure does (e.g., during model-based segmentation).

More generally, the geometry of features in the 3D volume can be matched to the geometry of the features expected in an image at the target plane in order to register the target plane to the 3D volume.

The target plane could be a plane at or near a standard plane which has already been registered to an anatomical coordinate system (e.g., the coordinate system of a model of the heart structure). The geometry of the segmented anatomical structure can thus be used to register the target plane to the segmented anatomical structure.

Additionally, arbitrary planes can be mapped from one volume to another by describing the plane in reference to the segmentation mesh of the anatomical structure in the first volume, transforming the plane references to the second volume via corresponding vertices in the mesh (that can be subject to affine but also non-rigid deformation), and finally deriving the corresponding plane in the second volume. In the case of arbitrary planes, it is preferred if an anatomical model is used to establish vertex-to-vertex correspondences such that the arbitrary plane can be established for all volumes.

In the case of a longitudinal study, upon a follow-up with at least one additional exam, a combined optimization can be run over all studies consisting of segmenting each 3D volume (e.g., via an anatomical model), extracting a target anatomical plane that is desired for review (e.g., a standard target plane or an arbitrary target plane) and choosing the slice resulting in maximum comparability over the various studies, allowing for a small deviation from the target plane.

The optimization can take into account the noise level, artifact count, FOV coverage, visibility of anatomical structures etc. when selecting the slices to be compared. This results in an optimized series of respective 2D slices per exam/point in time which are comparable, thus resulting in a higher diagnostic confidence.

To compensate for motion, residual errors in the segmentation or noise in the extracted 2D slices, it may be preferable to search for comparable 2D slices in the vicinity of the target plane. Of course, as some anatomical structures could be ambiguous, a global search over the 3D volume is possible. This may mean, for example, finding an arbitrary target plane which provides the best comparison between 3D volumes. However, this approach may lead to non-optimal results as the arbitrary plane may not show the desired features of the anatomical structure.

In some cases, it may be possible that a 2D scan of the anatomical structure already exists at the target plane (e.g., from a prior study/exam). In these cases, the 2D scan can be used to obtain the target plane and thus extract a further 2D slice from a 3D volume of the anatomical structure.

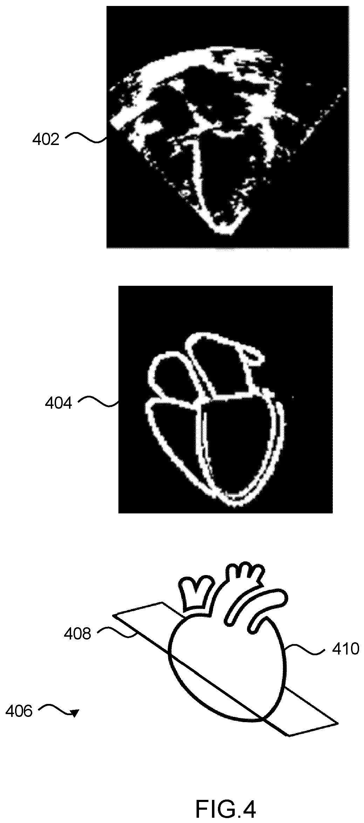

Fig. 4 illustrates an approach for obtaining a target plane from a 2D slice. In a longitudinal study, if at least one exam is a 2D scan 402 taken with a different technique or probe, or no 3D information is available for the exam, it is proposed to use the 2D scan 402 to obtain the target plane 408. Thus, the target plane 408 can be used to slice the 3D volume such that the 2D slices can be compared.

For each 2D image 402, the anatomical plane can be determined using a plane regression technique. The input 2D image 402 is segmented to identify the borders 404 of the anatomical structure. The plane parameters can then be derived by a regression convolutional neural network that has been trained with, for example, artificial pairs of contours and plane parameters. As such, the target plane 408 can be defined, relative to an anatomical model 410, using the plane parameters.

As previously described, the 3D volumes can then be segmented using a heart model or a deep-learning segmentation method and a corresponding slice can be generated, for example, using multi-planar reformation (MPR), with the determined plane parameters for the target plane 408.

The longitudinal series can now be presented for any plane found in the 2D scans. For multiple 2D scans, the user can select any 2D scan and the 3D acquisitions can thus be re-formatted to optimally review changes over time with respect to the selected scan's orientation.

A similar technique can be used in a 2D workflow that is done with a 3D probe. Most of the scans during an exam may still be recorded in 2D. However, at certain times (e.g., during end-diastolic frames), the system could record a single frame 3D image in the background, possibly with lower resolution. These recorded 2D slices would now have a 3D reference that can be analyzed. In other words, the plane of the 2D slices would be registered to a 3D model of the anatomical structure (i.e., via the 3D reference acquisitions). This way, the 2D workflow that many physicians are used to is kept and the target plane can be obtained for later use (e.g., to obtain further 2D slices at the target plane from later 3D acquisitions). This can be useful to not sacrifice framerate when scanning (e.g., for valve or larger field-of-view scanning).

The use of the 3D reference may provide more precise target planes as the target plane is already defined relative to a 3D reference of the anatomical structure and thus there is no need to apply plane regression to the 2D slices. For some target planes (e.g., short axis plane in cardiac ultrasound), plane regression may not always be precise.

Further, with the techniques described above, subsequent scans can be compared with each other, and if, for example, an acquisition plane does not align with a previous acquisition, a 2D slice can be obtained from the subsequent 3D acquisitions.

It is not possible to reformat an already acquired 2D image to best match across the longitudinal scans if the 2D image is not acquired at the target plane. However, it is still possible to derive a 2D image at the target plane using the 3D reference frame.

If knowledge of the target plane is used while scanning, one could adapt the 2D parameters to capture a corresponding target plane during the scanning. Knowledge of the target plane can also be used retrospectively such that deviations from the target plane can be found. Thus, possible flaws in the measurements can also be found.

Slicing/extracting 2D slices from 3D volumes of an anatomical structure can be used to fill gaps in longitudinal series of 2D scans.

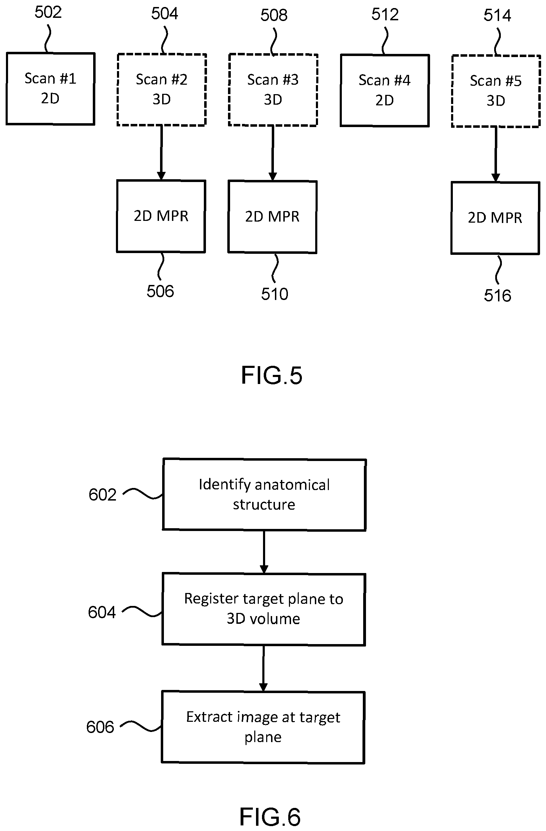

Fig. 5 shows a time series of scans including a first 2D scan 502, a second 3D scan 504, a third 3D scan 508, a fourth 2D scan 512 and a fifth 3D scan 514. The first 2D scan 502 and the fourth 2D scan 512 may be scans of an anatomical structure at a same target plane. In order to fill in the gaps between the first 2D scan 502 and the fourth 2D scan 512, the 3D scans obtained in between (and, possibly, before and/or after) the 2D scans can be sliced at the target plane corresponding to the first 2D scan 502 and/or the fourth 2D scan 512.

Extracting 2D scans from the 3D volume may involve using multi-planar reformation (MPR) on the 3D scans at the target plane. The target plane can be obtained by identifying the plane of the first 2D scan 502 and/or identifying the plane of the fourth 2D scan 512. The second 3D scan 504 can then be sliced at the target plane to obtain MPR slice 506. Similarly, the third 3D scan 508 can be sliced at the target plane to obtain MPR slice 510 and the fifth 3D scan 514 can be sliced at the target plane to obtain MPR slice 516. Thus, the first 2D scan 502 and the fourth 2D scan 512 can be compared to the MPR slices 506, 510 and 516.

In general, if a certain 2D scan is missing in the time series, the target plane can be detected or estimated from the other 2D scans and subsequently sliced from the 3D volumes. Thus, the sonographer can review a comparable slice also for the exam where originally acquisition of the 2D plane has failed or was forgotten.

The operator/user could decide to align the MPR slices to any of the 2D scans by selecting it (e.g., via click) and thus the MPR slices are matched to the selected scan. In case multiple 2D slices are selected, matching MPRs for each of them can be displayed simultaneously. This can give further insight as to whether differences in 2D scans originate from the different locations only (e.g., if the differences are also present when displaying corresponding MPRs from a single 3D scan) or from disease progression.

Fig. 6 shows a method for obtaining a medical image at a target plane using a three-dimensional, 3D, volume containing an anatomical structure. The anatomical structure is identified in the 3D volume in step 602. For example, a segmentation algorithm can be applied to the 3D volume. The segmentation algorithm may be a model-based segmentation algorithm trained on one or more models of the anatomical structure.

The target plane is then registered to the 3D volume in step 604. This may be achieved by analyzing the geometry of the segmented anatomical structure. For example, the relative position of features in the anatomical structure can be used to register the segmented anatomical structure to a model of the anatomical structure to which the target plane is already registered to (e.g., a segmented anatomical structure obtained from a previous exam). The target plane can then be transformed to the segmented anatomical structure. A medical image can then be extracted from the 3D volume at the registered target plane in step 606.

The concepts described herein generally apply to ultrasound imaging. However, said methods also apply to other medical imaging modalities with 3D acquisition modes.

The concepts escribed herein are particularly advantageous for obtaining standard views from 3D volumes. For example, in cardiac or fetal ultrasound imaging, standard views are of particular importance. The target planes described herein may correspond to said standard views.

The skilled person would be readily capable of developing a processor for carrying out any herein described method. Thus, each step of a flow chart may represent a different action performed by a processor, and may be performed by a respective module of the processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for obtaining a medical image at a target plane, the method comprising:
obtaining a three-dimensional, 3D, volume containing an anatomical structure:
identifying (602) the anatomical structure in the 3D volume;
analyzing the geometry of the anatomical structure in the 3D volume;
registering (604) the target plane to the 3D volume based on the analysis of the geometry of the anatomical structure; and
extracting (606) the medical image from the 3D volume at the registered target plane.

2. The method of claim 1, wherein identifying the anatomical structure comprises using a model-based segmentation algorithm trained on a model of the anatomical structure.

3. The method of claims 1 or 2, wherein extracting the medical image comprises:
extracting a plurality of medical images from the 3D volume in the vicinity of the registered target plane;
determining quality scores for the medical images; and
selecting a medical image, from the plurality of extracted medical images, based on the quality scores.

4. The method of any of claims 1 to 3, wherein the 3D volume is a first 3D volume, and the method further comprises:
obtaining a second 3D volume containing the anatomical structure;
identifying the anatomical structure in the second 3D volume;
analyzing the geometry of the anatomical structure in the second 3D volume;
registering the target plane to the second 3D volume based on the analysis of the geometry of the anatomical structure in the second 3D volume; and
extracting a second medical image from the second 3D volume at the registered target plane.

5. The method of any of claims 1 to 4, further comprising:
obtaining a two-dimensional, 2D, medical scan (402) of the anatomical structure; and
determining an anatomical plane from the 2D medical scan, wherein the target plane is the determined anatomical plane.

6. The method of claim 5, further comprising obtaining a 3D reference volume registered to the 2D medical scan, wherein determining the anatomical plane from the 2D medical scan comprises identifying the anatomical plane relative to the 3D reference volume.

7. The method of any of claims 1 to 6, further comprising:
obtaining a first 2D medical scan of the anatomical structure at a first time;
obtaining a second 2D medical scan of the anatomical structure at a third time;
obtaining the 3D medical volume at a second time, between the first time and the third time; and
determining a first anatomical plane from the first 2D medical scan and/or a second anatomical plane from the second 2D medical scan, wherein the target plane is one of the first anatomical plane or the second anatomical plane.

8. The method of any of claims 1 to 7, wherein extracting the medical image from the 3D medical volume comprises using multi-planar reformation, MPR, on the 3D medical volume.

9. The method of any of claims 1 to 8, wherein the 3D medical volume is a 3D ultrasound volume.

10. A computer program carrier comprising computer program code which, when executed on a processing system, cause the processing system to perform all of the steps of the method according to any of claims 1 to 9.

11. A system for obtaining a medical image at a target plane, the system comprising a processor configured to:
obtain a three-dimensional, 3D, volume containing an anatomical structure:
identify (602) the anatomical structure in the 3D volume;
analyze the geometry of the anatomical structure in the 3D volume;
register (604) the target plane to the 3D volume based on the analysis of the geometry of the anatomical structure; and
extract (606) the medical image from the 3D volume at the registered target plane.

12. The system of claim 11, wherein the processor is configured to identify the anatomical structure by using a model-based segmentation algorithm trained on a model of the anatomical structure.

13. The system of claims 11 or 12, wherein the processor is configured to extract the medical image by:
extracting a plurality of medical images from the 3D volume in the vicinity of the registered target plane;
determining quality scores for the medical images; and
selecting a medical image, from the plurality of extracted medical images, based on the quality scores.

14. The system of any of claims 11 to 13, wherein the 3D volume is a first 3D volume, and the processor is further configured to:
obtain a second 3D volume containing the anatomical structure;
identify the anatomical structure in the second 3D volume;
analyze the geometry of the anatomical structure in the second 3D volume;
register the target plane to the second 3D volume based on the analysis of the geometry of the anatomical structure in the second 3D volume; and
extract a second medical image from the second 3D volume at the registered target plane.

15. The system of any of claims 11 to 14, wherein the processor is further configured to:
obtain a two-dimensional, 2D, medical scan (402) of the anatomical structure; and
determine an anatomical plane from the 2D medical scan, wherein the target plane is the determined anatomical plane.
